# EUROPÄISCHE PATENTSCHRIFT

(11) **EP 2 450 213 B1**
(45) Veröffentlichungstag und Bekanntmachung des Hinweises auf die Patenterteilung: **21.08.2013**
(21) Anmeldenummer: 11185935.1
(22) Anmeldetag: 20.10.2011
(51) Int. Cl.: B60J 7/16

(54) **Vorrichtung zum Anheben und Absenken eines auf teleskopierbaren Rungen abgestützten Daches eines Nutzfahrzeugs**
Device for lifting and lowering the roof of a load vehicle supported on telescopic posts
Dispositif de soulèvement et d'abaissement d'un toit de camion soutenu par montants télescopables

(30) Priorität: 08.11.2010 DE 102010050504
(43) Veröffentlichungstag der Anmeldung: 09.05.2012
(73) Patentinhaber: F. Hesterberg & Söhne GmbH & Co. KG, 58256 Ennepetal (DE)
(72) Erfinder: Breme, Stefan, 58339 Breckerfeld (DE)
(74) Vertreter: Christophersen & Partner

(56) Entgegenhaltungen:
- EP-A1- 1 637 375
- FR-A1- 2 477 493
- US-A- 2 656 216

## Beschreibung

Die Erfindung betrifft eine Vorrichtung zum Anheben und Absenken eines Daches eines Nutzfahrzeugs, wobei die Vorrichtung teleskopierbare Rungen umfasst, auf denen das Dach abstützbar ist, mit den im Oberbegriff des Anspruchs 1 angegebenen Merkmalen.

Eine solche Vorrichtung ist aus der EP 1 637 375 A bekannt. In einer Runge, die mit einem Hebelmechanismus zum Anheben und Absenken eines das Fahrzeugdach stützenden und in der Runge geführten Hubelements versehen ist, ist in unterschiedlichen Höhen ein als U-förmige Gabel gestaltetes Arretierelement festlegbar. Um bei einem Absenken des Hubzylinders und damit des das Dach stützenden Hubelements als Anschlag bzw. untere Hubbegrenzung für das Hubelement zu dienen, wird das Arretierelement seitlich unter den Hubzylinder bewegt, und umfasst so U-förmig die nach unten aus dem Hubzylinder heraus ragende Kolbenstange.

Es hat sich herausgestellt, dass es bei derartigen Vorrichtungen im oft rauen Alltagsbetrieb eines Nutzfahrzeuges zu Abnutzungserscheinungen im Kontaktbereich zwischen Arretierelement und Hubzylinder kommen kann.

Der Erfindung liegt daher die **Aufgabe** zugrunde, eine Vorrichtung der eingangs genannten Art bereitzustellen, mit der sich derartige Verschleißerscheinungen reduzieren lassen.

Zur Lösung der Aufgabe wird eine Vorrichtung mit den Merkmalen des Anspruchs 1 vorgeschlagen.

Dadurch, dass das Arretierelement vor einem Absenken des Zylinders nicht zunächst in einer seitlichen Bewegung unter den Zylinder bewegt werden muss, beispielsweise als Element einer klappbaren Kniehebeleinrichtung, wird es mit der Erfindung möglich, an Stelle eines gabelförmigen Arretierelements ein Arretierelement vorzusehen, welches die Kolbenstange auf vollem Umfang umschließt. Indem die Kolbenstange nicht nur U-förmig, sondern auf ihrem gesamten Umfang umschlossen wird, kann die Auflagefläche für das untere Ende des Zylinders, also im Bereich des Kolbenstangenaustritts, vergrößert werden. Der durch die von oben wirkende Dachlast hervorgerufene Flächendruck auf das Arretierelement wird reduziert und es wird vermieden, dass es zu einem ungewollten, stark abnutzenden seitlichen Eingriff des beim Stand der Technik gabelförmigen Arretierelements mit dem Zylinder kommt. Beim Stand der Technik kommt es vor allem dann zu diesem Verschleiß, wenn zum Zeitpunkt des Anschwenkens des Arretierelements der Zylinder der Hubeinrichtung noch nicht ausreichend weit angehoben wurde.

Mit einer bevorzugten Ausgestaltung der Vorrichtung wird vorgeschlagen, dass das Arretierelement um eine Achse quer zu der Längsachse der Kolben- und Zylindereinheit schwenkbar ist.

Gemäß einer weiteren Ausgestaltung ist vorgesehen, dass das Arretierelement relativ verschiebbar zu der Kolbenstange an dieser ist. So wird ermöglicht, dass das Arretierelement das Hubelement in verschiedenen Höhenpositionen fixieren kann.

Gemäß einer weiteren Ausführungsform ist das Arretierelement als Arretierblock mit einer Durchgangsöffnung zur Hindurchführung der Kolbenstange ausgestaltet. Dies ermöglicht es, das bei einem Absenkvorgang des Daches durch eine Relativbewegung des Kolbens und des Zylinders die Last über das untere Ende des Zylinders, dem Kolbenstangenaustritt, über einem stabil geformtes Bauteil auf das Trägerprofil weitergeleitet wird. Die Last kann dabei auf dem kompletten Umfang, d. h. 360° der Durchgangsöffnung und damit sehr gleichmäßig aufgenommen werden.

Von Vorteil ist es, wenn das Arretierelement auf einer im Wesentlichen parallel zu der Durchgangsöffnung verlaufenden Seiten zumindest einen Arretiervorsprung zum formschlüssigen Eingriff in eine der Positionen am Trägerprofil aufweist.

Besonders bevorzugt ist eine Ausgestaltung bei der die Durchgangsöffnung zumindest im Bereich einer der zu der Durchgangsöffnung im Wesentlichen senkrecht verlaufenden Stirnseiten des Arretierblocks in Richtung seiner Schwenkbarkeit ein größeres Maß als der Durchmesser der Kolbenstange aufweist, wobei der Betrag der Vergrößerung größer ist als die Eingriffstiefe des Arretiervorsprungs. Erst ein derart vergrößertes Maß ermöglicht es, dass der Arretierblock zum Arretieren durch ein einfaches Schwenken um die Achse quer zu der Achse der Kolben- und Zylindereinheit und somit auf die Positionen des Trägerprofils zu oder von ihnen weg, mit den zur Auswahl stehenden Höhenpositionen in Eingriff gebracht werden kann, und dass umgekehrt dieser Eingriff für eine andere Höheneinstellung des Arretierblocks gelöst werden kann.

Von besonderem Vorteil für eine einfache und kostengünstige Fertigung sind die längs des Trägerprofils angeordneten Positionen als Stanzöffnungen auf dessen rückwärtiger Seite ausgestaltet.

Gemäß einer weiteren Ausgestaltung weist das Arretierelement an seiner dem Zylinder zugewendeten Stirnseite eine Mulde zur Anlage des den Austritt der Kolbenstange umgebenden unteren Endes des Zylinders auf. Durch die vorzugsweise an die Kontur des unteren Endes des Zylinders angepasste Mulde kann die Anlagefläche des Zylinders auf dem Arretierelement weiter vergrößert werden, was zu einer geringeren flächenbezogenen Belastung führt. Ebenfalls können, da das Zylinderende in der Mulde aufliegt und ein wenig in das Arretierelement eingreift, die beispielsweise bei Bremsungen auftretenden seitlichen Kräfte besser aufgenommen werden.

Von Vorteil für eine einfache Bedienbarkeit der Vorrichtung ist, wenn das Arretierelement an seinem dem Zylinder abgewendeten Ende zum Zwecke des manuellen Ergreifens und Verschwenkens eine Handhabe aufweist. Diese Handhabe ist vorzugsweise an der unteren, dem Benutzer zugewandten Seite der unteren Stirnseite angeordnet und vereinfacht bei der in der Regel manuellen Höhenverstellung das Schwenken des Arretierelements.

Ebenfalls für eine anwenderfreundliche Bedienung weist bei einer weiteren Ausführungsform das Arretierelement ein Federelement auf, welches das Arretierelement dauerhaft in Richtung zu den Positionen hin beaufschlagt, und welches gleichzeitig ein Reibglied zwischen dem Arretierelement und der Kolbenstange bildet. Wird das Arretierelement nach einer Höhenverstellung durch den Benutzer wieder losgelassen kann es zum Eingriff in eine der Positionen durch die Federkraft automatisch in deren Richtung schwenken. Ferner verhindert das Federelement als gleichzeitiges Reibglied, dass das Arretierelement zu weit auf der Kolbenstange abrutscht, es erschwert und damit dosiert also die Relativbewegung zwischen Arretierelement und Kolbenstange.

Bei einer weiteren bevorzugten Ausführungsform der Vorrichtung stützt ein Stützelement das Trägerprofil von unten her. Die auf das Arretierelement wirkende Last bzw. Anteile davon können über das Trägerprofil und das Stützelement auf das Gehäuseelement weitergeleitet werden. Eventuell lastempfindlichere Bauteile, wie z. B. das Hebellager können entlastet werden.

Weitere Vorteile und Einzelheiten ergeben sich aus der nachfolgenden Beschreibung eines Ausführungsbeispiels der Erfindung, wobei auf die Zeichnungen Bezug genommen wird. Darin zeigen:
- Fig. 1: eine Ausführungsform der Vorrichtung mit einem Kniehebeleinrichtung in ausgeklappter Stellung;
- Fig. 2: eine vergrößerte Detaildarstellung aus Figur 1;
- Fig. 3: den unteren Teil der Ausführungsform nach Figur 1 in einer Draufsicht;
- Fig. 4: die Darstellung aus Figur 3, allerdings ohne Zylinder und Kolbenstange;
- Fig. 5a: eine seitliche Schnittdarstellung einer zweiten Ausführungsform;
- Fign. 5b bis 5e: die Schnittdarstellung aus Figur 5a in verschiedenen Eingriffssituationen des Arretierblocks und des Stützelements, bei einem Wechsel der Höhenposition.

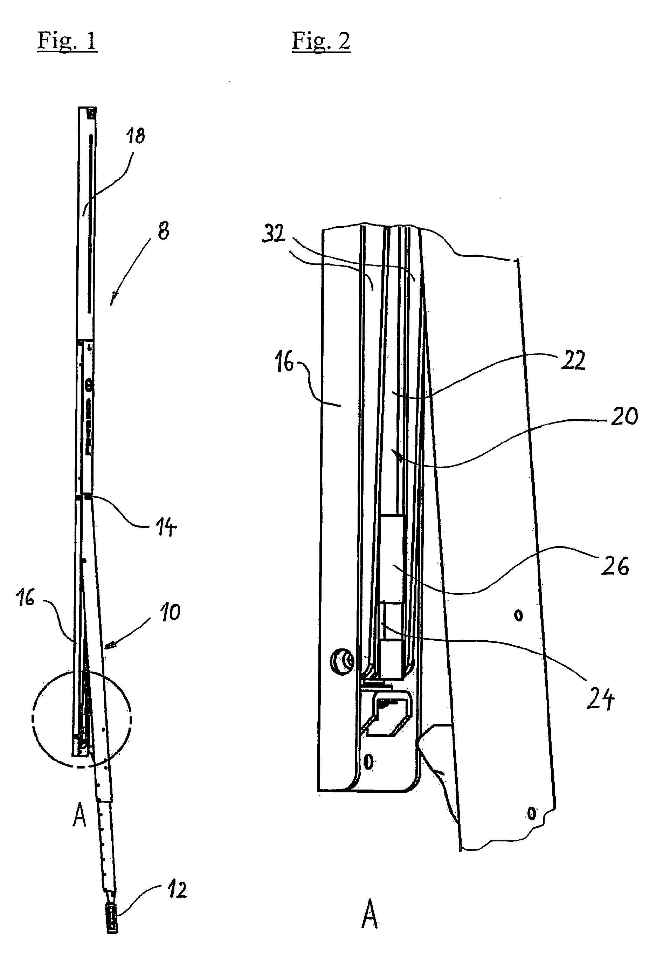

Die Figur 1 zeigt von einem Nutzfahrzeugaufbau eine ein Fahrzeugdach tragende Runge 8 mit einer Kniehebeleinrichtung 10 in deren ausgeklappter Stellung. Die Kniehebeleinrichtung 10 weist an ihrem unteren Ende eine Handhabe 12 für den Schwenkhebel auf und ist an ihrem oberen Ende durch ein Hebellager 14 an einem Gehäuseelement 16 angelenkt. Das Gehäuseelement 16 ist der Grundkörper der Runge 8 und ist an oder in der Höhe der Ladefläche des Nutzfahrzeugs starr befestigt. In dem als stabiles, langgestrecktes C-Profil ausgebildeten Gehäuseelement 16 ist ein Hubelement 18 vertikal und daher teleskopartig geführt. Das Hubelement 18 trägt an seinem auf der Zeichnung nicht dargestellten oberen Ende das Dach des Fahrzeugaufbaus.

Mittels einer Art Hin- und Herschwenken der Kniehebeleleinrichtung 10 kann das Hubelement 18 und damit das Fahrzeugdach angehoben werden, wobei sich das Hubelement 18 längs des Gehäuseelements 16 sukzessive nach oben bewegt. Eine mit Hydraulikflüssigkeit gefüllte Kolben- und Zylindereinheit 20 dient dabei dazu, die einmal erreichte Höhenposition des Hubelements 18 zu halten. Nach dem Be- oder Entladen des Fahrzeugs mit angehobenem Dach kann bei eingeklappter Kniehebeleinrichtung 10 über das Hubelement 18 unter Verkürzung der Runge 8 das Dach wieder abgesenkt werden, bis diese Absenkbewegung durch Anlage an einem nachfolgend noch beschriebenen Arretierelement 26 gestoppt wird.

Die in Figur 2 gezeigte Detaildarstellung der Einzelheit "A" der Figur 1 zeigt innerhalb des durch das C-Profil des Gehäuseelements 16 eingefassten Hohlraumes den starr mit dem Hubelement 18 verbundenen Zylinder 22 der hydraulischen Kolben-Zylinder-Einheit 20, sowie ferner die aus dem unteren Ende des Zylinders 22, also dem Kolbenstangenaustritt 45, austretende und an ihrem unteren Ende mit dem Gehäuseelement 16 der Runge verbundene Kolbenstange 24.

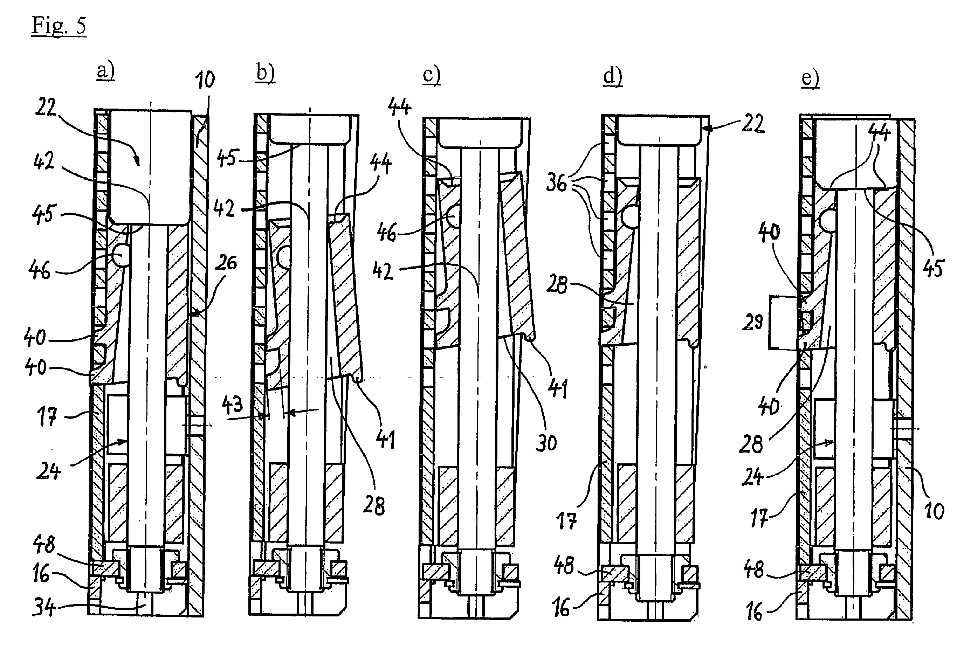

Das als etwa quaderförmiger Block ausgestaltete Arretierelement 26 weist entlang seiner Längsachse eine Durchgangsöffnung 28 (vgl. Figur 5) auf, durch welche die Kolbenstange 24 der Kolben-Zylinder-Einheit hindurchführt. Der Arretierblock 26 ist in der Stellung nach Figur 2 in einer bestimmten Position 29 gegenüber einem Trägerprofil 17 festgelegt, und stützt sich so an dem Trägerprofil 17 ab. Der Bereich des Zylinders 22 rund um den Austritt 45 der Kolbenstange 24 liegt in Ringform auf der oberen Stirnseite 30 des Arretierblocks 26 auf. Die Last des Zylinders 22, des Hubelements 18 sowie vor allem des Daches werden über diese Stirnseite 30 in den Arretierblock 26 eingeleitet, und von diesem über das Trägerprofil 17 und die Kniehebeleinrichtung 10 auf das Gehäuseelement 16 der Runge weitergeleitet.

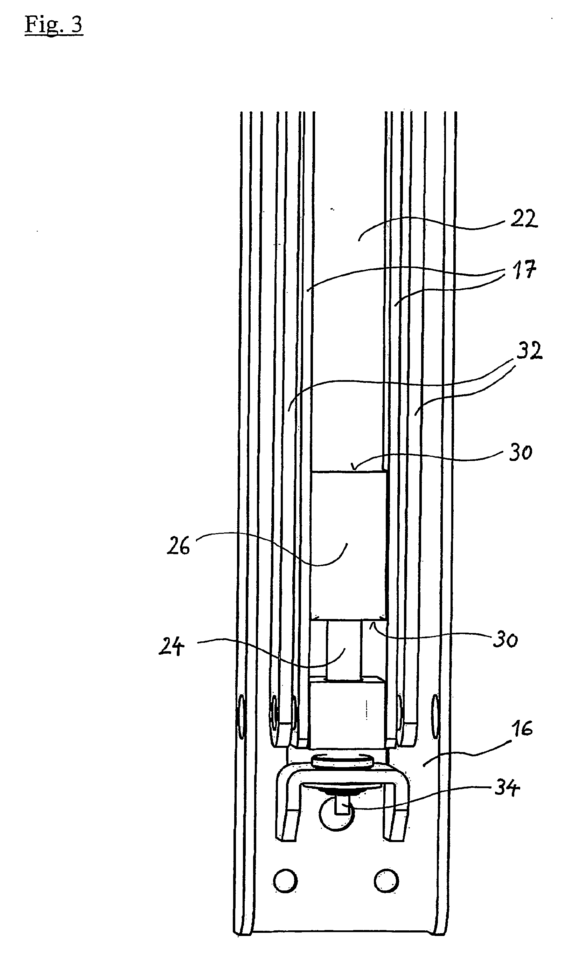

Die Figur 3 zeigt eine Draufsicht, aus der weitere Elemente deutlicher zu erkennen sind. Beispielsweise ein Betätigungselement 34 zum Entspannen der Kolben-Zylindereinheit ist bereits aus der DE 10 2010 037 553 A bekannt. Ein erstes Hebelglied 32 der Kniehebeleinrichtung 10 ist mit seinem in Fig. 3 erkennbaren unteren Ende schwenkbar an dem Trägerprofil 17 angelenkt, welches vertikal beweglich innerhalb der Runge 8 geführt ist. Das Trägerprofil 17 ist an seinem auf der Zeichnung nicht erkennbaren, oberen Ende in der Weise mit dem Hubelement 18 verbindbar, dass mit dem Anheben des Hebelglieds 32 und des damit gelenkig verbundenen Trägerprofils 17 zugleich auch das Hubelement 18, und damit das Dach des Fahrzeugs, angehoben wird. Durch Druck auf das am unteren Ende der Kolbenstange 24 angeordnete Betätigungselement 34 wird in der Kolben- und Zylindereinheit ein hydraulischer Überströmquerschnitt geöffnet. Dies hat zur Folge, dass sich mit dem Zylinder 22 das Hubelement 18 aus seiner angehobenen Stellung abgesenkt, bis sich das untere Ende des Zylinders 22, also rund um den Kolbenstangenaustritt 45, auf der oberen Stirnseite 30 des Arretierblocks 26 absetzt.

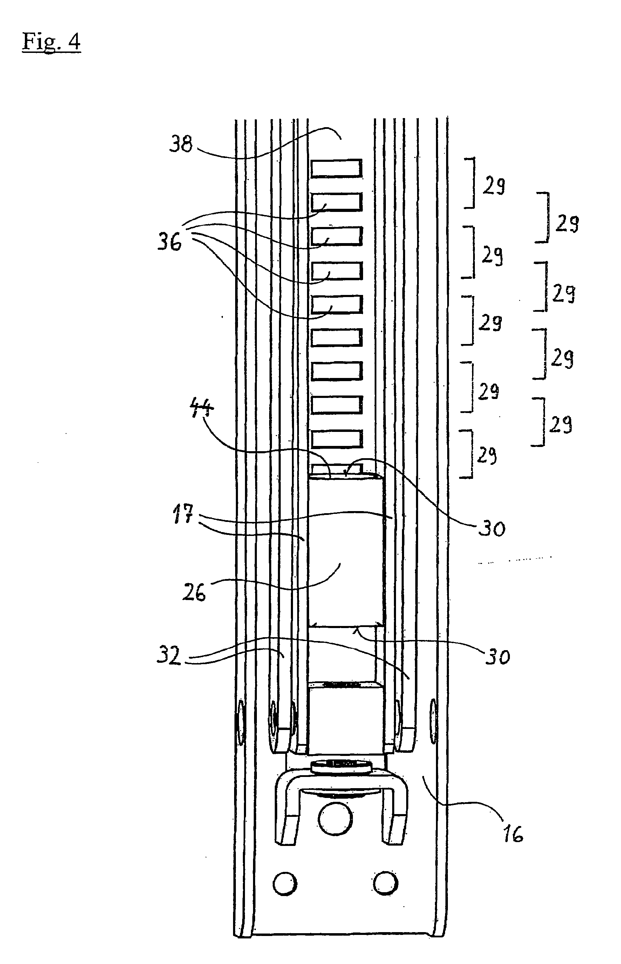

Zur Veranschaulichung sind in Figur 4 im Vergleich zu Figur 3 sowohl der Zylinder 22, die Kolbenstange 24 als auch das Betätigungselement 34 darstellerisch entfernt. Horizontal verlaufende, die Positionen 29 bildende Stanzöffnungen 36 in der Rückwand des Trägerprofils 17 werden dadurch in Figur 4 sichtbar. Die Stanzöffnungen 36 bilden daher das mögliche Höhenraster für die Positionen 29, in die der Arretierblock 26 eingestellt werden kann.

Die seitlichen Schnittdarstellungen Figuren 5a bis 5e verdeutlichen bei einer zweiten Ausführungsform das Funktionsprinzip des Arretierblocks 26 durch eine schrittweise Darstellung einer Änderung der Position 29 des Arretierblocks 26. Die zweite Ausführungsform unterscheidet sich von der ersten Ausführungsform durch ein Stützelement 48, welches bei eingeklappter Kniehebeleinrichtung 10 das untere Ende des Trägerprofils 17 abstützt.

In den Figuren 5a bis 5e sind ferner Einzelheiten des Arretierblocks 26 erkennbar. An seiner den Stanzöffnungen 36 zugewandten Rückseite 38 weist der Arretierblock 26 zwei an die Form der Stanzöffnungen 36 angepasste Arretiervorsprünge 40 mit einer Eingriffstiefe 43 auf, welche sich in Figur 5a in Eingriff mit den untersten beiden Stanzöffnungen 36 und damit in der tiefsten einstellbaren Höhenposition des Hubelements 18 befinden. Den Stanzöffnungen 36 abgewandt weist der Arretierblock 26 im Übergang zu seiner unteren Stirnseite 30 eine etwas vorspringende Handhabe 41 für eine bessere Griffigkeit des Arretierblocks 26 für den Benutzer auf.

Die Durchgangsöffnung 28 entspricht im Bereich der oberen Stirnseite 30 weitgehend dem Durchmesser der Kolbenstange 24, mit lediglich dem notwendigen Spiel. Um jedoch ein Verschwenken des Arretierelements 26 um eine horizontale Schwenkachse quer zu der Längsachse 42 der Kolben- und Zylindereinheit 20 in Richtung zu den Stanzöffnungen 36 hin zu ermöglichen, vergrößert sich der Öffnungsquerschnitt der Durchgangsöffnung 28 von der oberen Stirnseite 30, welche rund um die Kolbenstange als Mulde 44 gestaltet ist, zur unteren Stirnseite 30. Die Kontur dieser Mulde 44 kann an die entsprechende Kontur des unteren Endes des Zylinders 22 angepasst sein. Vorzugsweise geht die Durchgangsöffnung 28 von oben nach unten von einer im Wesentlichen Kreisform in eine ovale oder eine Ellipsenform über. Das so vergrößerte Maß der Durchgangsöffnung 28 in Richtung der Arretiervorsprünge 40 ist jeweils auf der Höhe jeder der beiden Arretiervorsprünge 40 größer als deren Eingriffstiefe 43, um durch Schwenken des Arretierblocks 26 von den Stanzöffnungen 36 weg die Arretiervorsprünge 40 aus dem Eingriff mit den Stanzöffnungen 36 zu lösen, vgl. hierzu Figur 5b.

Soll der Arretierblock 26 aus der in Figur 5a gezeigten untersten Position 29 in eine höhere Position 29 verstellt werden, muss zunächst der auf der oberen Stirnseite 30 des Arretierblocks 26 in der Mulde 44 liegende Zylinder 22 angehoben werden. Dies geschieht durch die Pumpbewegung der Kniehebeleinrichtung 10. Sodann kann bei ausgeklappter Kniehebeleinrichtung 10 entsprechend Figur 1 der Arretierblock 26 durch Ergreifen der Handhabe 41 soweit nach fahrzeugaußen geschwenkt werden, dass die Arretiervorsprünge 40 nicht mehr in Eingriff mit den Stanzöffnungen 36 sind, vgl. Figur 5b. Anschließend wird der Arretierblock 26 per Hand auf die Höhe der gewünschten neuen Position 29 verschoben, vgl. Figur 5c. Befinden sich die Arretiervorsprünge 40 im Wesentlichen horizontal vor den dieser Position 29 entsprechenden Stanzöffnungen 36, wird der Arretierblock 26 wieder nach hinten verschwenkt, wo er in die Stanzöffnungen 36 der neuen Position 29 eingreift.

Ein in dem Arretierblock 26 angeordnetes und zugleich unter Reibung gegen die Kolbenstange 24 anliegendes Federelement 46 sorgt für eine Vorspannung derart, dass eine Schwenkbewegung des Arretierelements 26 in Richtung des Eingriffs in die Stanzöffnungen 36 dauernd unterstützt wird. Vor allem dient das Federelement 46 als Reibglied und dosiert die Längsbewegung des Arretierblock 26 längs der Kolbenstange 24. Lässt ein Benutzer während der Höheneinstellung des Arretierblocks 26 diesen beispielsweise aus Versehen los, rutscht dieser nicht unkontrolliert nach unten ab, sondern verbleibt durch das Reibglied 46 in gleicher Höhe.

Gemäß Figur 5e stoppt, bei eingeklappter Kniehebeleinrichtung 10, der Arretierblock 26 den Zylinder 22 im Zuge des erneutem Absenkens des Hubelements 18 bereits in der neu eingestellten, hier höheren Position. Das Dach des Fahrzeugs senkt sich folglich weniger weit und nur soweit ab, bis der Zylinder 22 durch Anliegen in der Mulde 44 des jetzt höher eingestellten Arretierblocks 26 gestoppt worden ist.

### Bezugszeichenliste

- 8: Runge
- 10: Kniehebeleinrichtung
- 12: Hebelhandhabe
- 14: Hebellager
- 16: Gehäuseelement
- 17: Trägerprofil
- 18: Hubelement
- 20: Kolben- und Zylindereinheit
- 22: Zylinder
- 24: Kolbenstange
- 26: Arretierelement / -block
- 28: Durchgangsöffnung
- 29: Position
- 30: Stirnseite
- 32: Hebelglied
- 34: Betätigungselement
- 36: Stanzöffnung
- 38: rückwärtige Seite
- 40: Arretiervorsprung
- 41: Handhabe
- 42: Längsachse
- 43: Eingriffstiefe
- 44: Mulde
- 45: Kolbenstangenaustritt
- 46: Federelement / Reibungsglied
- 48: Stützelement

## Patentansprüche

1. Vorrichtung zum Anheben und Absenken eines Daches eines Nutzfahrzeugs, wobei die Vorrichtung teleskopierbare Rungen (8) umfasst, auf denen das Dach abstützbar ist, wobei die Rungen (8) jeweils ein Gehäuseelement (16), ein darin angeordnetes Trägerprofil (17) und ein relativ zu dem Gehäuseelement (16) höhenverstellbares Hubelement (18) aufweisen, wobei sich das Hubelement (18) über eine Kolben- und Zylindereinheit (20) gegenüber dem Gehäuseelement (16) abstützt, und wobei das Hubelement (18) in einstellbaren Höhenpositionen mittels eines das Hubelement (18) von unten her stützenden Arretierelements (26) auffangbar ist, **dadurch gekennzeichnet, dass** das Arretierelement (26) zur Einstellung der Höhenposition des Hubelements (18) in verschiedenen Positionen (29) längs des Trägerprofils (17) festlegbar ist, und dass das Arretierelement (26) eine eine Kolbenstange (24) der Kolben- und Zylindereinheit (20) umschließende obere Stirnseite (30) aufweist.

2. Vorrichtung nach Anspruch 1, **dadurch gekennzeichnet, dass** das Arretierelement (26) um eine Achse quer zu der Längsachse (42) der Kolben- und Zylindereinheit (20) schwenkbar ist.

3. Vorrichtung nach Anspruch 1 oder 2, **dadurch gekennzeichnet, dass** das Arretierelement (26) relativ verschiebbar zu der Kolbenstange (24) auf dieser angeordnet ist.

4. Vorrichtung nach Anspruch 3, **dadurch gekennzeichnet, dass** das Arretierelement (26) als Arretierblock mit einer Durchgangsöffnung (28) zur Hindurchführung der Kolbenstange (24) ausgestaltet ist.

5. Vorrichtung nach Anspruch 4, **dadurch gekennzeichnet, dass** das Arretierelement (26) auf seiner im Wesentlichen parallel zu der Durchgangsöffnung (28) verlaufenden Rückseite (38) mit mindestens einem Arretiervorsprung (40) zum formschlüssigen Eingriff in eine der Positionen (29) am Trägerprofil (17) versehen ist.

6. Vorrichtung nach Anspruch 5, **dadurch gekennzeichnet, dass** die Durchgangsöffnung (28) zumindest im Bereich einer der zu der Durchgangsöffnung (28) im Wesentlichen senkrecht verlaufenden Stirnseiten (30) des Arretierblocks (26) in Richtung seiner Schwenkbarkeit ein größeres Maß als der Durchmesser der Kolbenstange (24) aufweist, wobei der Betrag der Vergrößerung mindestens gleich der Eingriffstiefe (43) des Arretiervorsprungs (40) ist.

7. Vorrichtung nach einem der Ansprüche 1 bis 6, **dadurch gekennzeichnet, dass** die Positionen (29) längs des Gehäuseelements (16) als in dem Trägerprofil (17) ausgebildete Stanzöffnungen (36) ausgestaltet sind.

8. Vorrichtung nach einem der Ansprüche 1 bis 7, **dadurch gekennzeichnet, dass** das Arretierelement (26) an seinem dem Zylinder (22) zugewendeten Stirnseite (30) eine Mulde (44) zur Anlage des den Kolbenstangenaustritt (45) umgebenden unteren Endes des Zylinders (22) aufweist.

9. Vorrichtung nach einem der Ansprüche 1 bis 8, **dadurch gekennzeichnet, dass** das Arretierelement (26) an seinem dem Zylinder (22) abgewendeten Ende zum Zwecke des manuellen Ergreifens und Verschwenkens eine Handhabe (41) aufweist.

10. Vorrichtung nach einem der Ansprüche 1 bis 9, **dadurch gekennzeichnet, dass** das Arretierelement (26) ein Federelement (46) aufweist, welches das Arretierelement (26) dauerhaft in Richtung zu den Positionen (29) hin beaufschlagt, und welches gleichzeitig ein Reibglied zwischen dem Arretierelement (26) und der Kolbenstange (24) bildet.

11. Vorrichtung nach einem der Ansprüche 1 bis 10, **gekennzeichnet durch** ein Stützelement (48), welches das Trägerprofil (17) von unten her stützt.

## Claims

1. An apparatus for raising and lowering a roof of a utility vehicle, wherein the apparatus comprises telescopic stanchions (8) on which the roof is capable of being supported, wherein the stanchions (8) have in each case a housing element (16), a carrier profile (17) arranged in the latter and a lifting element (18) vertically displaceable relative to the housing element (16), wherein the lifting element (18) is supported by way of a piston / cylinder unit (20) with respect to the housing element (16), and wherein the lifting element (18) is capable of being caught at settable vertical positions by means of a locking element (26) supporting the lifting element (18) from below, **characterized in that** the locking element (26) is capable of being fixed at various positions (29) along the carrier profile (17) in order to set the vertical position of the lifting element (18), and the locking element (26) has an upper end face (30) surrounding a piston rod (24) of the piston / cylinder unit (20).

2. An apparatus according to Claim 1, **characterized in that** the locking element (26) is pivotable about an axis transversely to the longitudinal axis (42) of the piston / cylinder unit (20).

3. An apparatus according to Claim 1 or 2, **characterized in that** the locking element (26) is arranged on the piston rod (24) so as to be displaceable relative to the latter.

4. An apparatus according to Claim 3, **characterized in that** the locking element (26) is designed in the form of a locking block with a through-opening (28) for the passage of the piston rod (24).

5. An apparatus according to Claim 4, **characterized in that** the locking element (26) is provided on its rear side (38) extending substantially parallel to the through-opening (28) with at least one locking projection (40) for engaging in one of the positions (29) on the carrier profile (17) in a positively locking manner.

6. An apparatus according to Claim 5, **characterized in that** the through-opening (28) has a larger dimension than the diameter of the piston rod (24) at least in the region of one of the end faces (30) of the locking block (26) - extending substantially at a right angle to the through-opening (28) - in the direction of its pivotability, wherein the amount of the increase is at least equal to the depth of engagement (43) of the locking projection (40).

7. An apparatus according to any one of Claims 1 to 6, **characterized in that** the positions (29) along the housing element (16) are designed in the form of stamped openings (36) formed in the carrier profile (17).

8. An apparatus according to any one of Claims 1 to 7, **characterized in that** at its end face (30) facing the cylinder (22) the locking element (26) has a hollow (44) for the abutment of the lower end of the cylinder (22) surrounding the exit (45) of the piston rod.

9. An apparatus according to any one of Claims 1 to 8, **characterized in that** at its end facing away from the cylinder (22) the locking element (26) has a handle (41) for the purpose of manual gripping and pivoting.

10. An apparatus according to any one of Claims 1 to 9, **characterized in that** the locking element (26) has a spring element (46) which constantly acts upon the locking element (26) in the direction towards the positions (29) and which at the same time forms a friction member between the locking element (26) and the piston rod (24).

11. An apparatus according to any one of Claims 1 to 10, **characterized by** a support element (48) which supports the carrier profile (17) from below.

## Revendications

1. Dispositif de soulèvement et d'abaissement d'un toit de camion, étant entendu que le dispositif comprend des montants télescopables (8) sur lesquels le toit peut être soutenu, étant entendu que les montants (8) présentent chacun un élément de logement (16), un profilé de support (17) agencé dans celui-ci et un élément de levage (18) réglable en hauteur par rapport à l'élément de logement (16), étant entendu que l'élément de levage (18) est soutenu au moyen d'une unité de piston et de cylindre (20) par rapport à l'élément de logement (16), et étant entendu que l'élément de levage (18) peut être reçu à des positions réglables en hauteur au moyen d'un élément d'arrêt (26) soutenant l'élément de levage (18) par le bas, **caractérisé en ce que** l'élément d'arrêt (26) peut être fixé dans différentes positions (29) le long du profilé de support (17) aux fins du réglage de la position de l'élément de levage (18) en hauteur et **en ce que** l'élément d'arrêt (26) présente un côté frontal supérieur (30) entourant une tige de piston (24) de l'unité de piston et de cylindre (20).

2. Dispositif selon la revendication 1, **caractérisé en ce que** l'élément d'arrêt (26) peut pivoter autour d'un axe transversalement à l'axe longitudinal (42) de l'unité de piston et de cylindre (20).

3. Dispositif selon la revendication 1 ou 2, **caractérisé en ce que** l'élément d'arrêt (26) est agencé sur la tige de piston (24) de façon coulissante relativement à celle-ci.

4. Dispositif selon la revendication 3, **caractérisé en ce que** l'élément d'arrêt (26) est réalisé en tant que bloc d'arrêt avec une ouverture traversante (28) destinée à faire passer la tige de piston (24).

5. Dispositif selon la revendication 4, **caractérisé en ce que** l'élément d'arrêt (26) est doté, sur son côté arrière (38) s'étendant sensiblement parallèlement à l'ouverture traversante (28), d'au moins une saillie d'arrêt (40) destinée à réaliser un engagement positif dans une des positions (29) sur le profilé de support (17).

6. Dispositif selon la revendication 5, **caractérisé en ce que** l'ouverture traversante (28) présente, au moins dans la zone d'un des côtés frontaux (30) du bloc d'arrêt (26) s'étendant sensiblement perpendiculairement à l'ouverture traversante (28), dans la direction de son pivotement potentiel, une dimension supérieure au diamètre de la tige de piston (24), étant entendu que la proportion de l'agrandissement est au moins égale à la profondeur d'engagement (43) de la saillie d'arrêt (40).

7. Dispositif selon l'une des revendications 1 à 6, **caractérisé en ce que** les positions (29) le long de l'élément de logement (16) sont réalisées en tant qu'ouvertures de poinçonnage (36) pratiquées dans le profilé de support (17).

8. Dispositif selon l'une des revendications 1 à 7, **caractérisé en ce que** l'élément d'arrêt (26) présente, sur son côté frontal (30) dirigé vers le cylindre (22), une cavité (44) destinée à recevoir l'extrémité inférieure du cylindre (22) entourant la sortie de la tige de piston (45).

9. Dispositif selon l'une des revendications 1 à 8, **caractérisé en ce que** l'élément d'arrêt (26) présente, sur son extrémité opposée au cylindre (22), une manette (41) aux fins de la saisie et du pivotement manuels.

10. Dispositif selon l'une des revendications 1 à 9, **caractérisé en ce que** l'élément d'arrêt (26) présente un élément de ressort (46), qui agit en permanence sur l'élément d'arrêt (26) dans la direction des positions (29) et qui forme en même temps un organe de friction entre l'élément d'arrêt (26) et la tige de piston (24).

11. Dispositif selon l'une des revendications 1 à 10, **caractérisé par** un élément d'appui (48) qui soutient le profilé de support (17) depuis le bas.
